# EUROPÄISCHE PATENTSCHRIFT

(11) **EP 0 960 162 B1**
(45) Veröffentlichungstag und Bekanntmachung des Hinweises auf die Patenterteilung: **26.11.2003**
(21) Anmeldenummer: 98909440.4
(22) Anmeldetag: 11.02.1998
(51) Int. Cl.: C08K 7/02, C08J 5/04, C08L 101/00, C08L 3/02, C08L 1/10, B29B 9/14, B29C 47/00, B29C 47/86

(54) **VERFAHREN ZUR HERSTELLUNG EINES AUSGANGSMATERIALS ZUR SPÄTEREN FERTIGUNG EINES FASERVERSTÄRKTEN KUNSTSTOFF-FORMTEILS, AUSGANGSMATERIAL SOWIE DAMIT HERGESTELLTES KUNSTSTOFF-FORMTEIL**
PRODUCTION OF A SOURCE MATERIAL WITH A VIEW TO MANUFACTURING A FIBRE-REINFORCED PLASTIC CASTING, THE SOURCE MATERIAL, AND THE PLASTIC CASTING OBTAINED WITH SAID MATERIAL
MODE DE FABRICATION D'UN MATERIAU DE DEPART EN VUE DE LA FABRICATION D'UNE PIECE MOULEE EN PLASTIQUE FIBRO-RENFORCE, LE MATERIAU DE DEPART, ET LA PIECE MOULEE PLASTIQUE FABRIQUEE AVEC CE MATERIAU

(30) Priorität: 12.02.1997 DE 19705280
(43) Veröffentlichungstag der Anmeldung: 01.12.1999
(73) Patentinhaber: DaimlerChrysler AG, 70567 Stuttgart (DE)
(72) Erfinder: FÖLSTER, Thomas, D-71120 Grafenau (DE); GREINER, Ralph, D-71229 Leonberg (DE); SCHÄFER, Dirk, D-89075 Ulm (DE)
(86) Internationale Anmeldenummer: EP9800757
(87) Internationale Veröffentlichungsnummer: WO98036024

(56) Entgegenhaltungen:
- EP-A- 0 319 589
- WO-A-95/04106
- GB-A- 2 090 849
- US-A- 3 728 294
- PATENT ABSTRACTS OF JAPAN vol. 012, no. 206 (M-708), 14.Juni 1988 & JP 63 009511 A (NIPPON KOKAN KK), 16.Januar 1988,
- PATENT ABSTRACTS OF JAPAN vol. 007, no. 022 (C-148), 28.Januar 1983 & JP 57 180648 A (SHOWA DENKO KK), 6.November 1982,

## Beschreibung

Die Erfindung betrifft ein Verfahren zur Herstellung eines Ausgangsmaterials zur späteren Fertigung eines faserverstärkten Kunststoff-Formteils sowie Verwendung des Verfahrens zur Herstellung eines Ausgangsmaterials zur späteren Fertigung eines faserverstärkten Kunststoff-Formteils gemäß den Oberbegriffen der Ansprüche 1 bzw 25.

Aus dem Artikel Titel: "Werkstoffe im Automobilbau", in der DE-Z: Sonderausgabe der Automobiltechnische Zeitung (ATZ) ist ein faserverstärktes Kunststoff-Formteil bekannt, das aus einer Kunststoffmatrix und aus Naturfasern, die in der Kunststoffmatrix eingebettet sind, gebildet ist. Um eine gute Entsorgung des Kunststoff-Formteils zu gewährleisten, besteht die Kunststoffmatrix aus sogenannten Bio-Polymeren, die natürliche, organische Makromoleküle sind, und aus nachwachsenden Rohstoffen wie Zuckerrüben, Kartoffeln, Mais oder Cellulose (auch Altpapier) gewonnen werden. Als Naturfasern werden derartige Fasern bezeichnet, die als nachwachsende Rohstoffe aus der Natur gewonnen werden. Derartig ausgebildete Kunststoff-Formteile werden bei der Entsorgung biologisch unbedenklich abgebaut, da alle ihre organischen Bestandteile verrotten und bei dem Rottezyklus in Wasser, CO₂, Humus und Biomasse sowie Bakterien und Pilze umgewandelt werden wobei das bei der Verottung entstehende CO₂ in der Ökö-Bilans neutral ist, da es ja zuvor von den nachwachsenden Rohstoffen aus der Atmosphäre entnommen wurde. Kunststoff-Formteile, bei denen biegeschlaffe bzw. biegeweichen Fasern, wie insbesondere Naturfasern in einer Kunststoff-Matrix aus synthetischen und/oder biologischen Polymeren eingelagert sind, weisen zumeist eine sehr schlechte Verteilung der Fasern auf; d.h. die Fasern sind zumeist gebündelt und weisen eine schlechte statistische Gleichverteilung auf. Dadurch wiederum ist die Stabilität dieser Kunststoff-Formteile sehr gering. Ferner ist, bedingt durch die Beschädigung der Fasern bei der Formgebung, die mittlere Faserlänge auch sehr begrenzt.

Die Aufgabe der Erfindung ist es, ein Verfahren zur Herstellung eines Ausgangsmaterial anzugeben, mit dem später in einem an sich bekannten Formgebungsverfahren wie Spritzen, Druckgießen, Fließpressen und dgl. preiswerte Kunststoff-Formteile mit in einer Kunststoffmatrix eingelagerten biegeschlaffen Fasern, insbesondere Naturfasern, hergestellt werden können, deren Stabilität verbessert ist. Desweiteren ist es Aufgabe der Erfindung ein das Ausgangsprodukt sowie ein entsprechendes Kunststoff-Formteil vorzuschlagen.

Die Aufgabe wird mit eine Verfahren mit den Verfahrenschritten des Anspruchs 1 gelöst. Durch die trockene Vermischen des Polymers bzw. der Polymere und der biegeschlaffen Fasern zu einem Feststoff-Gemenge und das sich anschließende zumindest teilweise Einbetten der Fasern in dem erwärmten Polymer bzw. den erwärmten Polymeren sind die Fasern in dem Ausgangsmaterial in einem hohen Maße vereinzelt und statistisch gleichverteilt. Ferner ist bei dem erfindungsgemäßen Ausgangsmaterial und auch bei einem daraus hergestellten Kunststoff-Formteil die mittlere Faserlänge gegenüber bisherigen Formteilen länger. Wird aus einem derartigen Ausgangsmaterial ein Formteil bspw. gespritzt oder formgegossen, weist das entsprechende Formteil dann auch die vereinzelten und in hohem Maße gleichverteilten Fasern auf, wodurch in einer preiswerten Weise ein Formteil mit guten mechanischen Eigenschaften hergestellt werden kann. Desweiteren ist bei der Erfindung gegenüber vergleichbaren Formteilen aus rein synthetischen Substanzen durch den Einsatz von Naturfasern der Anteil an ökölogischen bedenklichen Stoffen vermindert.

Weitere vorteilhafte Ausgestaltungen der Erfindung sind den jeweiligen Unteransprüchen entnehmbar. Im übrigen wird die Erfindung anhand von in den Figuren dargestellten Ausführungsbeispieles und sechs beispielhaften Proben nähers erläutert. Dabei zeigt
- Fig. 1: eine Schnitt durch ein plattenartiges Kunststoff-Formteil,
- Fig. 2: eine mit einem Rasterelektronenmikroskop aufgenommene 500-fache Vergrößerung eines Schnittes durch Probe 2,
- Fig. 3: eine REM-Aufnahme einer 500-fachen Vergrößerung eines Schnittes durch Probe 5,
- Fig. 4: eine REM-Aufnahme einer 500-fachen Vergrößerung eines Schnittes durch Probe 6, un
- Fig. 5: ein Diagramm des Anteils der mittleren Faserlänge bei verschiedenen hergestellten Kunststoff-Formteilen.

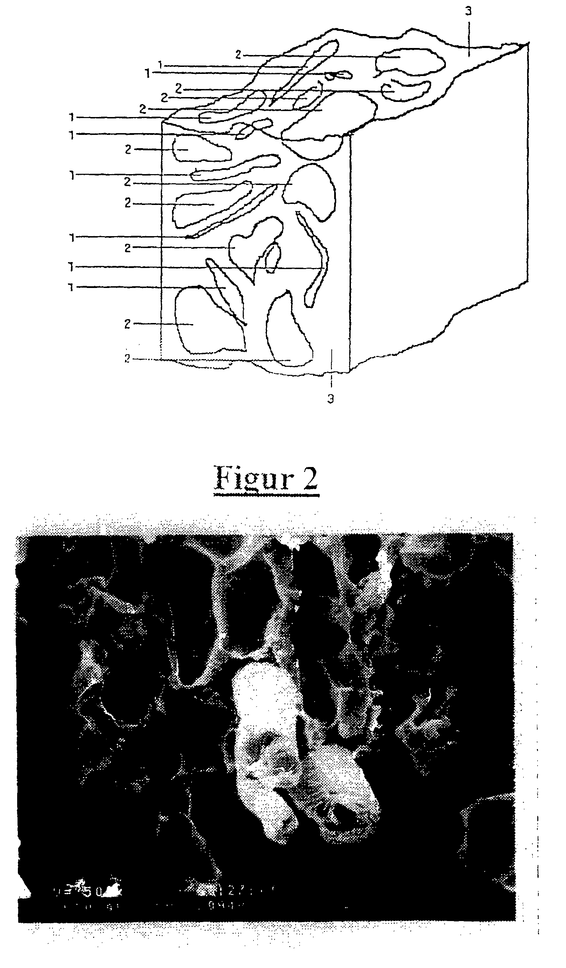

In Figur 1 ist der prinzipielle innere Aufbau eines erfindungsgemäßen faserverstärktes Kunststoff-Formteil dargestellt. Das Kunststoff-Formteil weist eine Kunststoffmatrix auf, in der angeordneten Naturfasern 1 gleichverteilt angeordnet sind. Die Kunststoffmatrix selbst weist zwei miteinander vermischte Polymere auf, von denen eines ein Bio-Polymer 2 und das andere ein gegenüber biologischen Beanspruchungen zumindest weitgehend resistentes Polymer 3 ist. Allerdings ist selbst das resistente Polymer 2 sinnvollerweise auch ein Kunststoff, der selbst oder zumindest dessen Ausgangsprodukte nachwachsende Rohstoffe sind.

Für das Bio-Polymer 2 ist insbesondere die Verwendung von thermoplastischer und/oder granulärer Stärke zweckmäßig. Für das resistent Polymer 3 ist es sinnvoll ein thermoplastisches Polymer zu verwenden, wobei die folgende Stoffe besonders günstig sind: Polyurethan (PU) und/oder Polyamid(PA) und/oder Cellulose und/oder ein Cellulosederivat und/oder Cellulosepropionat und/oder PA 11 und/oder PA 610 und/oder PA 669 und/oder ein PA auf der Basis von Azelainsäure und/oder ein thermoplastisches PU mit Polyolkomponente nachwachsender Rohstoffe und/oder ein Celluloseetherester.

Im Falle einer Matzrix mit synthetischen Kunststoffen sind auch die nachfolgenden Materialien sinnvoll: thermoplastische Polyolefine, thermoplastische Polyester, thermoplastische Polyurethane und hierbei bevorzugt Polyethylene, Polyamide und besonders bevorzugt Polyprpylene.

Im Falle eines Celluloseetherester als resistentes Polymer 3 ist es sinnvoll, einen Celluloseetherester mit hohem Substitutionsgrad zu verwenden, da dieser biologisch zumindest weitgehend resistent ist.

In zweckmäßiger Weise bildet das Bio-Polymer 2 in der Kunststoffmatrix eine disperse Phase, während das resistente Polymer 3 eine kontinuierliche Phase bildet, wobei das resistente Polymer 3 die disperse Phase zumindest weitgehend, vorzugsweise vollständig umschließt.

Bei der Verwendung von thermoplastischer Stärke für die Kunststoffmatrix kann die Stärke zur besseren Verarbeitung mit gebräuchlichen Weichmachern, wie insbesondere Glyzerin und/oder Harnstoff und/oder Fruchtsäure, aufgeschlossen werden.

Im folgenden wird die mögliche Herstellung eines erfindungsgemäßen faserverstärkten Kunststoff-Formteils beschrieben.

Zuerst wird ein in einer Agglomerator-Anlage der FA. Pallmann Typ PFY 250/40 (siehe Tabelle 1 und 2, Proben 1 bis 3 und 6), deren Lochmatrize einen Durchmesser von 280 mm, eine Dicke von 92 mm und einen Eohrungsdurchmesser von 3,2 mm hat die bevorzugt körnig vorliegende Kunststoffmasse aus Bio-Polymer 2 und resistentem Polymer 3 mit den Naturfasern 1 in trockenem Zustand getrennt voneinander in die Mischkammer der Ringmatrizenpresse eingebracht und innig zu einem Feststoff-Gemenge vermischt. Dabei wurden Naturfasern 1, die eine mittlere Länge kleiner 30 mm, bevorzugt kleiner 20 mm und besonders bevorzugt kleiner 10 mm aufweisen, in der Kunststoffmasse verteilt. Bei der Verteilung der Naturfasern 1, bei denmen es sich insbesondere um aus der Textilaufbereitung stammende und entsprechend aufbereitete Fasern handelt, in der Kunststoffmasse werden diese vorzugsweise von der Kunststoffmasse zumindest weitgehend umschlossen.

Anschließend wird das Feststoff-Gemenge, das aus dem vermischten Kunststoff/Naturfaser-Gemisch besteht und das zwischen 5 und 60 Gewichts-%, insbesondere zwischen 5 und 35 Gewichts-% Naturfasern 1 aufweist, auf eine Temperatur zwischen 100 °C bis 250 °C insbesondere bis 230 °C bspw. mittels eines Agglomerators erwärmt, wodurch der Kunststoff zumindest bereichsweise plastifiziert wird. Durch diese Plastifizierung können die Fasern umschlossen und in den Kunststoff eingebettet werden. Die durch Friktion erreichte Verarbeitungstemperatur lag hierbei zwischen 150 und 200 °C. Die Durchsatzleistung belief sich auf etwa 150 kg/h bei einem Schüttgewicht zwischen 490 und 500 g/l.

Sinnvollerweise erfolge die Erwärmung im Bereich vor und/oder beim Transport durch die Öffnungen der Ringmatrize. Das durch die Öffnungen transportierte Material wird nach den Öffnungen abgekühlt und zur Herstellung des Ausgangsmaterials granuliert.

Das erwärmte Feststoff-Gemenge wird durch an sich bekannte Verfahren wie bspw. durch Spritzen, Extrudieren und/oder Pressen und dgl. in die gewünschte Form gebracht und abgekühlt, wodurch das Kunststoff-Formteil härtet. Spätestens bei der Formgebung des Kunststoff-Formteils wird das Bio-Polymer 2 von dem resistenten Polymer 3 zumindest weitgehend umschlossen.

Zur Herstellung des Feststoff-Gemenges wurden das resistente Polymer 3 - im Falle der in den Tabellen beschriebenen Proben 1 bis 6 Cellulosepropoionat (CP) - und das Bio-Polymer 2 granuläre Kartoffelstärke (Proben 1 bis 3) oder granuläre thermoplastische Stärke (bei Probe 6) vorgemischt, und per Rüttelrinne einer Zuführschnecke zugeführt.

Die Dosierung der Naturfasern 1 (Grünflachsfasern) erfolgte über einen Dosier-Vorratsbehälter und eine Austragsschnecke im Bereich der Zuführschnecke.

Insgesamt wird mit der obigen Methode ein kompaktes Ausgangsmaterial (Agglomerator) von relativ gleichmäßiger Größe, einem guten Zusammenhalt und ausreichender Homogenität hergestellt, aus welchem anschließend in üblicher Weise das Kunststoff-Formteil gefertigt werden kann. In den beiden nachfolgenden Tabellen sind derartige Kunststoff-Formteile am Ende mit einem "A" gekennzeichnet (siehe Proben 1 bis 3 sowie Probe 6).

Die Vorteile des Agglomerators liegen darin,
- daß kein thermischer Abbau der Kunststoffe und der Fasern erfolgt,
- daß ein rieselfähiges Ausgangsmaterial aus einem Kunststoff/Naturfaser-Gemisch erzeugt wird,
- daß das Ausgangsmaterial eine hohe Festigkeit aufweist, so daß es bei einer weiteren Verarbeitung und bei einem Transport allenfalls noch geringfügig zerfällt und
- daß das Ausgangsmaterial ggf . durch eine Entgasung einen geringen Feuchtigkeitsgehalt aufweist.

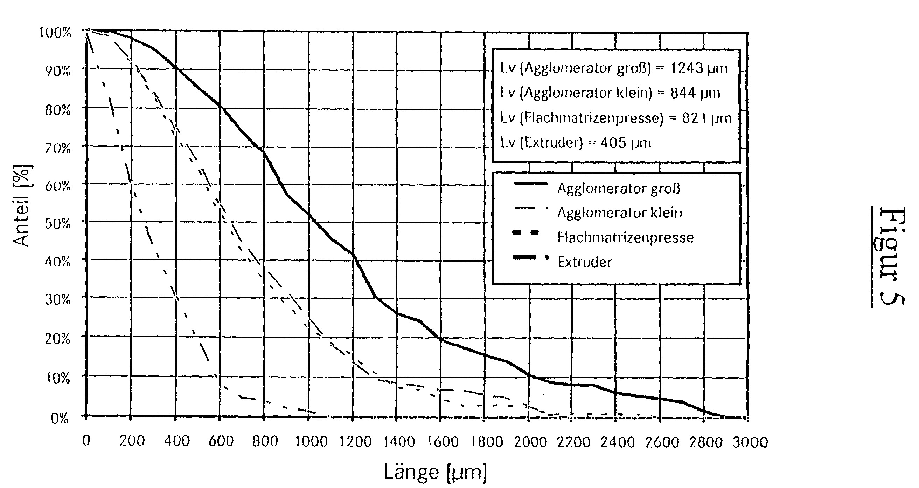

Der Vorteil der Erfindung bezüglich den Fasern zeigt sich insbesondere anhand dem Diagramm in Figur 5, in dem der Anteil von Fasern einer mittleren Faserlänge bei verschiedenen hergestellten Kunststoff-Formteilen dargestellt ist. Insbesondere zeigt sich hier, daß die mittlere Faserlänge bei Kunststoff-Formteilen, die mit dem erfindungsgemäßen Ausgangsmaterial hergestellt wurden am längsten ist. So beträgt bei Maschinen mit einem vergleichbaren Ausstoßvolumen die mittlere Faserlänge bei einem erfindungsgemäßen Vorgehen (2-ter Graph von oben) ca. 840 µm, bei einer Flachmatrizenpresse (2-ter Graph von unten) ca. 820 µm und bei einem Extruder (unterer Graph) sogar nur ca. 400 µm.

Bevorzugte Verwendungen für mit der Erfindung hergestellte Kunststoff-Formteile sind Formteile für Last- oder Personenkraftwagen oder Schienenfahrzeuge oder Luftfahrzeuge, insbesondere für deren Karosserie und/oder deren Verkleidung.

Bei der Herstellung der Kunststoff-Formteile wurde auch eine Flachmatrizenpresse verwendet, die besser unter dem Namen "Kollermühle" bekannt ist. Hierbei werden die Kunststoffe und die Naturfasern 1 nur mechanisch miteinander verpreßt und nicht plastifiziert. Es handelt sich also um eine Kompaktierung, bei der das Ausgangsmaterial derart verdichtet wird, daß sich ein Kunststoff-Formteil ausreichender Stabilität und Festigkeit bildet.

In den beiden nachfolgenden Tabellen sind derartige Kunststoff-Formteile am Ende mit einem "B" gekennzeichnet (siehe Proben 1 bis 3 sowie Probe 6) .

In den beiden bereits genannten Tabellen 1 und 2 ist Wasseraufnahme und einige Materialeigenschaften von erfindungsgemäß hergestellten Kunststoff-Formteile angegeben. Bei den einzelnen Proben 1 bis 6 werden sowohl die verwendeten Materialien als auch deren prozentuale Zusammensetzung angegeben. Zum besseren Vergleich weisen die Proben 1 bis 5 bis auf den unterschiedlichen Anteil an Weichmachern die gleichen Ausgangsmaterialien auf.

Unterschiede gab es im Mischungsverhältnis und in der Herstellung des Ausgangsmaterial, das - wie oben erwähnt - entweder unter Zuhilfenahme eines Agglomerators oder einer Flachmatrizenpresse (also einer sogenannten Kollermühle) hergestellt wurde.

Zur Kennzeichnung der Zusammensetzung der Proben wird die nachfolgend aufgeführte allgemeine Nomenklatur verwendet,

Probe i) : Ex/F/FF U:V:W A oder K, mit
- E:: CP mit x-% Weichmacher und/oder
- E:: thermoplastische Stärke (TPS) mit x-% Glyzerin (G) als Weichmacher,
- F:: granuläre Kartoffelstärke (gKS),
- FF:: Grünflachsfasern
- A:: Verwendung eines Agglomoérators
- K:: Verwendung einer Kollermühle.

**Tabelle 1:**

| Wasseraufnahme in [%] nach DIN 53 495 | | | | | | |
|---|---|---|---|---|---|---|
| Probe | Zusammensetzung | 1h | 2h | 4h | 8h | 24h |
| 1 | CP10/gKS/FF 70:20:10 A | 0,6 | 0, 7 | 1,1 | ― | 1, 7 |
| 2 | CP10/gKS/FF 60:27:13 A | 0,9 | 1,1 | 1,5 | ― | 2,2 |
| 3 | CP10/gKS/FF 50:33:17 A | ― | ― | ― | ― | ― |
| 4 | CP10/gKS/FF 60:20:20 K | 1,1 | 1,5 | 2,0 | ― | 2,7 |
| 5 | CP10/gKS/FF 60:27:13 K | 1,1 | 1,5 | 1, 9 | ― | 2, 7 |
| 6 | CP10/TPS20G/FF 43:43:14 A | 1,4 | 2,1 | 2,9 | 4,1 | 7,2 |

**Tabelle 2:**

| Materialeigenschaften | | | | |
|---|---|---|---|---|
| Probe | Zusammensetzung | Zug-E-Modul nach DIN 53 455 in[N/mm²] | Zugfestigkeit nach DIN 53 445 in [N/mm²] | Schlagzähigkeit nach DIN 53 453 in [KJ/m] |
| 1 | CP10/gKS/FF 70:20:10 A | 3623 | 41 | 8 |
| 2 | CP10/gKS/FF 60:27:13 A | 4580 | 41 | 8 |
| 3 | CP10/gKS/FF 50:33:17 A | 4357 | 37 | 5 |
| 4 | CP10/gKS/FF 60:20:20 K | 5142 | 36 | 8 |
| 5 | CP10/gKS/FF 60:27:13 K | 4358 | 34 | 8 |
| 6 | CP10/TPS20G/ FF 43:43:14 A | 3238 | 29 | 7 |

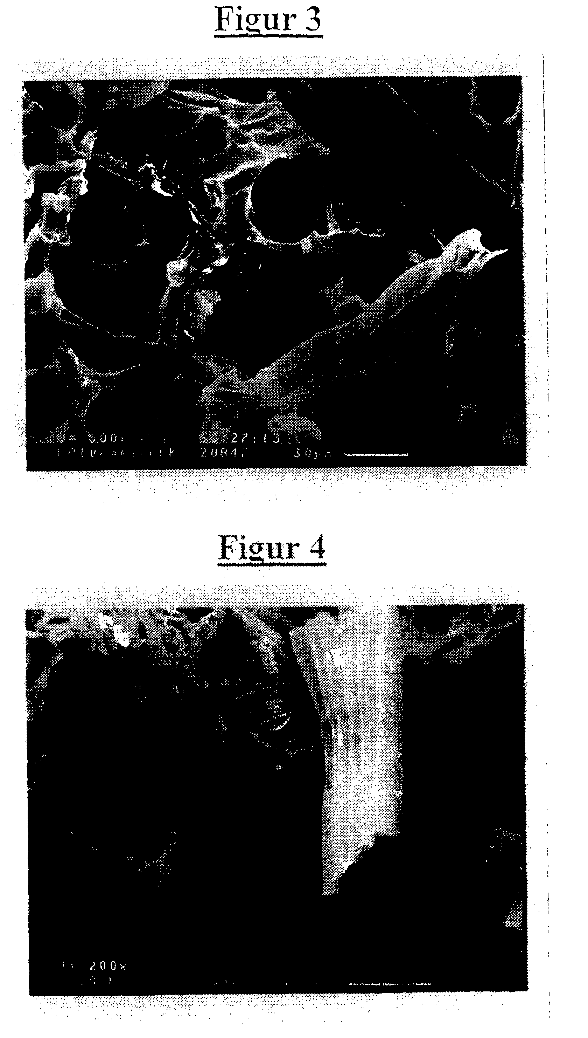

In den Figuren 2 bis 4 sind Rasterelektronenmikroskop-Aufnahme (REM) von Schnitten durch die Proben 2, 5 und 6 mit einer 500-fachen Vergrößerung dargestellt. Vor den Aufnahmen wurde die gKS aus dem Bereich des Schnittes durch spülen mit Wasser entfernt; d.h. in den Vertiefungen war gKS wobei das sichtbare und keine Fasern betreffende Material das resistente Polymer, im vorliegenden Fall also CP ist. Allen Aufnahmen ist gemeinsam, daß sie eine gleichmäßige Verteilung der Kunststoffe und der Fasern aufweisen. Desweiteren ist gut zu erkennen, daß das resistente Polymer das Bio-Polymer und die Fasern weitgehend umfaßt.

Im folgenden die Beispiele 7 bis 12 zur Herstellung des Ausgangsmaterial und eines daraus hergestellten faserverstärktem Kunststoff-Formteil aufgeführt, wobei die Beispiele in die einzelnen funktional zusammenhängenden Gruppen getrennt wurde:
■ Vorgabematerial zur Beigabe in die Mischkammer des Agglomorators,
■ Verarbeitungsparameter des Vorgabematerials zur Herstellung des Ausgangsmaterials und
■ Produkteigenschaften eines aus dem Ausgangsmaterial hergestellten faserverstärten Kunststoff-Formteils.

### Beispiel 7:

| Polypropylen / Flachsfasern | |
|---|---|
| Vorgabematerial | |
| Matrix | Polypropylen der Firma Hoechst, Handelsname Hostalen PPU 0180, Pulver |
| Fasern | Flachsfaern, mittlere Faserlänge ca. 2.150 mm |
| Faservolumenanteil | 30 % |

| Verarbeitungsparameter | |
|---|---|
| Verarbeitungsgerät | Ringmatrizenpresse |
| Innendurchmesser | 120 mm |
| Außendurchmesser | 160 mm |
| Bohrungsanzahl | 300 |
| Bohrungsdurchmesser | 4 mm |
| Flügeldrehzahl | 433 min⁻¹ |
| Produkttemperatur | - |
| Durchsatz | - |
| | |

| Produkteigenschaften | |
|---|---|
| Reißfestigkeit | 34.5 MPa |
| Zug-E-Modul | 5.050 MPa |
| Schlagzähigkeit | 11.5 kJ/m² |
| mittlere Faserlänge | 830 µm |

### Beispiel 8:

| Polypropylen / Haftvermittler / Hanffasern | |
|---|---|
| Vorgabematerial | |
| Matrix | Polypropylen der Firma Hoechst, Handelsname Hostalen PPU O 180, Pulver |
| Haftvermittler | Maleinsäureanhydridmodifiziertes Polypropylen der Firma Hoechst, Handelsname Hostaprime HC 5, Pulver |
| Fasern | Hanffasern, mittlere Faserlänge ca. 2.150 mm |
| Haftvermittleranteil | 1.5% bezogen auf Fasermasse |
| Faservolumenanteil | 40% |
| | |

| Verarbeitungsparameter | |
|---|---|
| Verarbeitungsgerät | Ringmatrizenpresse |
| Innendurchmesser | 120 mm |
| Außendurchmesser | 160 mm |
| Bohrungsanzahl | 300 |
| Bohrungsdurchmesser | 4 mm |
| Flügeldrehzahl | 433 min⁻¹ |
| Produkttemperatur | - |
| Durchsatz | - |
| | |

| Produkteigenschaften | |
|---|---|
| Reißfestigkeit | 52.5 MPa |
| Zug-E-Modul | 6.375 MPa |
| Schlagzähigkeit | 13 kJ/m² |
| mittlere Faserlänge | 620 µm |

### Beispiel 9:

| Polyamid 11/ Flachsfasern | |
|---|---|
| Vorgabematerial | |
| Matrix | Polyamid 11 der Firma Elf Atochem, Handelsname Rilsan B, Pulver |
| Fasern | Flachsfasern, mittlere Faserlänge ca. 2.150 mm |
| Faservolumenanteil | 25 % |
| | |

| Verarbeitungsparameter | |
|---|---|
| Verarbeitungsgerät | Ringmatrizenpresse |
| Innendurchmesser | 120 mm |
| Außendurchmesser | 160 mm |
| Bohrungsanzahl | 300 |
| Bohrungsdurchmesser | 4 mm |
| Flügeldrehzahl | 260 min⁻¹ |
| Produkttemperatur | ca. 105 °C |
| Durchsatz | 30 kg/h |
| | |

| Produkteigenschaften | |
|---|---|
| Reißfestigkeit | 52.5 MPA |
| Zug-E-Modul | 4.050 MPa |
| Schlagzähigkeit | 15 kJ/m² |
| mittlere Faserlänge | 745 µm |

### Bejspiel 10:

| Cellulosepropionat / Flachsfasern | |
|---|---|
| Vorgabematerial | |
| Matrix | Cellulosepropionat der Fa. Albis, Handelsname Cellidor CP 400-10, Granulat |
| Fasern | Flachsfasern, mittlere Faserlänge ca. 2.150 mm |
| Faservolumenanteil | 26 % |
| | |

| Verarbeitungsparameter | |
|---|---|
| Verarbeitungsgerät | Ringmatrizenpresse |
| Innendurchmesser | 120 mm |
| Außendurchmesser | 145 mm |
| Bohrungsanzahl | 300 |
| Bohrungsdurchmesser | 3.2 mm |
| Flügeldrehzahl | 433 min⁻¹ |
| Produkttemperatur | ca. 145 °C |
| Durchsatz | 30 kg/h |
| | |

| Produkteigenschaften | |
|---|---|
| Reißfestigkeit | 52.5 MPA |
| Zug-E-Modul | 5.475 MPa |
| Schlagzähigkeit | 10.5 kJ/m² |
| mittlere Faserlänge | 775 µm |

### Beispiel 11:

| Cellulosepropionat / Granuläre Stärke / Flachsfasern | |
|---|---|
| Vorgabematerial | |
| Matrix | Cellulosepropionat der Fa. Albis, Handelsname Cellidor CP 400-10, Granulat |
| Füllstoff | Granuläre Kartoffelstärke der Firma |
| | Südstärke, Handelsname Superior |
| Füllstoffgewichtsanteil | 20 % |
| Fasern | Flachsfasern, mittlere Faserlänge ca. 2.500 mm |
| Faservolumenanteil | 9 % |
| | |

| Verarbeitungsparameter | |
|---|---|
| Verarbeitungsgerät | Ringmatrizenpresse |
| Innendurchmesser | 250 mm |
| Außendurchmesser | 280 mm |
| Bohrungsanzahl | - |
| Bohrungsdurchmesser | 3.2 mm |
| Flügeldrehzahl | 700 min⁻¹ |
| Produkttemperatur | ca. 175 °C |
| Durchsatz | - |
| | |

| Produkteigenschaften | |
|---|---|
| Reißfestigkeit | 41 MPA |
| Zug-E-Modul | 3.625 MPa |
| Schlagzähigkeit | 10.5 kJ/m² |
| mittlere Faserlänge | 1.245 µm |

### Beispiel 12:

| Cellulosepropionat / Flachsfaern | |
|---|---|
| Vorgabematerial | |
| Matrix | Cellulosepropionat der Firma Eastman, Handelsname Tenite Propionate 360 - 16, Pulver |
| Fasern | Flachsfasern, mittlere Faserlänge ca. 2.500 mm |
| Faservolumenanteil | 26 % |
| | |

| Verarbeitungsparameter | |
|---|---|
| Verarbeitungsgerät | Flachmatrizenpresse |
| Matrizendurchmesser | 175 mm |
| Bohrungsanzahl | - |
| Bohrungsdurchmesser | 4 mm |
| Flügeldrehzahl | 100 min⁻¹ |
| Produkttemperatur | ca. 110 °C |
| Durchsatz | 19 kg/h |
| | |

| Produkteigenschaften | |
|---|---|
| Reißfestigkeit | 32 MPa |
| Zug-E-Modul | 3.910 MPa |
| Schlagzähigkeit | 15.5 kJ/m² |
| mittlere Faserlänge | 820 µm |

Bei den obigen Beispielen zeigt sich insbesondere anhand des Beipiels 12, daß bei den nichterfindungsgemäßen Verfahren der Durchsatz wesentlich verringert werden muß, wenn man eine vergleichbare mittlere Faserlänge erhalten will.

Bevorzugte Verwendungen für erfindungsgemäße Kunststoff-Formteile sind Formteile für Last- oder Personenkraftwagen oder Schienenfahrzeuge oder Luftfahrzeuge, insbesondere für deren Karosserie und/oder deren Verkleidung.

Obwohl die Ausführungsbeispiele Kunststoff-Matrizen mit synthetischen und/oder biologischen Polymeren beschreiben, kann ein erfindungsgemäßes Kunststoff-Formteil auch nur synthetische Polymere aufweisen. In diesem Fall können die Formteile insbesondere besonders preiswert hergestellt werden.

## Patentansprüche

1. Verfahren zur Herstellung eines Ausgangsmaterials zur späteren Fertigung eines faserverstärkten Kunststoff-Formteils durch ein Verfahren wie bspw. durch Spritzen, Extrudieren und/oder Pressen und dgl., **gekennzeichnet durch** die Gemeinsamkeit folgender Verfahrensschritte,
■ die Fasern (1) und der im festen Zustand vorliegende Kunststoff (2, 3) werden getrennt voneinander in eine Mischkammer einer Matrixpreßmaschine gegeben,
■ die Fasern (1) werden vor dem Zuführen in die Mischkammer auf eine Länge kleiner 30 mm gekürzt,
■ der Kunststoff (2, 3) wird in gekörnter Form in die Mischkammer eingebracht,
■ in der Mischkammer werden der Kunststoff (2, 3) und die Fasern (1) zu einem Feststoff-Gemenge innig vermischt,
■ das Feststoff-Gemenge wird in Richtung einer Öffnungen aufweisenden Matrize der Matixpreßmachine transportiert,
■ im Bereich vor bzw. in den Öffnungen der Matrize wird das Feststoff-Gemenge erwärmt,
■ bei bzw. nach der Erwärmung des Feststoff-Gemenges werden die Fasern (1) von dem Kunststoff (2, 3) zumindest bereichsweise umschlossen und/oder zumindest teilweise eingebettet und
■ das **durch** die Matrize transportierte Material wird zerkleinert als granuliertes Ausgangsmaterial zum späteren Formen verwenden.

2. Verfahren nach Anspruch 1,
**dadurch gekennzeichnet,**
**daß** als Kunststoff (2, 3) ein synthetischer Kunststoff (2, 3) gewählt wird.

3. Verfahren nach Anspruch 1,
**dadurch gekennzeichnet,**
**daß** die Fasern (1) und der im festen Zustand vorliegende Kunststoff (2, 3) trocken in die Mischkammer der Matrixpreßmaschine gegeben werden.

4. Verfahren nach Anspruch 1,
**dadurch gekennzeichnet,**
**daß** die Fasern (1) und der im festen Zustand vorliegende Kunststoff (2, 3) in die Mischkammer einer Ringmatrixpresse gegeben werden.

5. Verfahren nach Anspruch 1,
**dadurch gekennzeichnet,**
**daß** die Fasern (1) vor dem Zuführen in die Mischkammer auf eine Länge kleiner 20 mm gekürzt werden.

6. Verfahren nach Anspruch 1,
**dadurch gekennzeichnet,**
**daß** die Fasern (1) vor dem Zuführen in die Mischkammer auf eine Länge kleiner 10 mm gekürzt werden.

7. Verfahren nach Anspruch 1,
**dadurch gekennzeichnet,**
**daß** die Fasern (1) vor dem Austritt aus den Öffnungen der Matrix von dem Kunststoff (2, 3) zumindest bereichsweise umschlossen und/oder zumindest teilweise in den Kunststoff (2, 3) eingebettet werden.

8. Verfahren nach Anspruch 1,
**dadurch gekennzeichnet ,**
**daß** der Kunststoff (2, 3) des Feststoff-Gemenges durch das Erwärmen zumindest teilweise plastifiziert und/oder zumindest teilweise erweicht wird.

9. Verfahren nach Anspruch 1,
**dadurch gekennzeichnet,**
**daß** dem Feststoff-Gemenge Naturfasern beigegeben werden.

10. Verfahren nach Anspruch 1,
**dadurch gekennzeichnet,**
**daß** dem Feststoff-Gemenge zwischen 5 und 50 Gewichts-% Fasern (1) beigegeben werden.

11. Verfahren nach Anspruch 1,
**dadurch gekennzeichnet,**
**daß** dem Feststoff-Gemenge zwischen 10 und 35 Gewichts-% Fasern (1) beigegeben werden.

12. Verfahren nach Anspruch 1,
**dadurch gekennzeichnet,**
**daß** dem Feststoff-Gemenge zwischen 15 und 30 Gew.-% Fasern (1) beigegeben werden.

13. Verfahren nach Anspruch 1,
**dadurch gekennzeichnet,**
**daß** das Feststoff-Gemenge vor bzw. in den Öffnungen der Matrize auf 100 °C bis 250 °C erwärmt wird.

14. Verfahren nach Anspruch 1,
**dadurch gekennzeichnet,**
**daß** das Feststoff-Gemenge vor bzw. in den Öffnungen der Matrize auf 100 °C bis 230 °C erwärmt wird.

15. Verfahren nach Anspruch 1,
**dadurch gekennzeichnet,**
**daß** Feststoff-Gemenge in der Mischkammer trocken gemischt wird.

16. Verfahren nach Anspruch 1,
**dadurch gekennzeichnet ,**
**daß** das durch die Matrize transportierte Material vor dem Zerkleinern zu dem granuliertes Ausgangsmaterial abgekühlt wird.

17. Verfahren nach Anspruch 1,
**dadurch gekennzeichnet,**
**daß** das innig vermischte Feststoff-Gemenge als Feststoff bis kurz vor bzw. bis zur Matrize der Matixpreßmachine transportiert und erst dort erwärmt wird.

18. Verfahren nach Anspruch 1,
**dadurch gekennzeichnet,**
**daß** erst das erwärmte Feststoff-Gemenge durch die Öffnungen der Matrize transportiert wird.

19. Verfahren nach Anspruch 1,
**dadurch gekennzeichnet,**
**daß** synthetische Kunststoffe (3) und/oder Bio-Polymere (2) aus nachwachsenden Rohstoffen eingesetzt werden.

20. Verfahren nach Anspruch 1,
**dadurch gekennzeichnet,**
**daß** nur Fasern (1) mit einer maximalen Länge von 20 mm eingesetzt werden.

21. Verfahren nach Anspruch 1,
**dadurch gekennzeichnet,**
**daß** nur Fasern (1) mit einer maximalen Länge von 10 mm eingesetzt werden.

22. Verfahren nach Anspruch 1,
**dadurch gekennzeichnet,**
**daß** als Fasern (1) aus der Textilaufbereitung stammende Fasern (1) eingesetzt werden.

23. Verfahren nach Anspruch 22,
**dadurch gekennzeichnet ,**
**daß** die aus der Textilaufbereitung stammenden Fasern (1) vor der Zugabe in die Mischkammer aufbereitet und /oder von Fremdstoffen befreit werden.

24. Verfahren nach Anspruch 22,
**dadurch gekennzeichnet,**
**daß** die aus der Textilaufbereitung stammende Fasern (1) vor der Zugabe in die Mischkammer geschnitten und /oder von Fremdstoffen befreit werden.

25. Verwendung eines Verfahrens nach Anspruch 1 zur Herstellung eines Ausgangsproduktes für faserverstärkte Kunststoff-Formteilen von Last- oder Personenkraftwagen oder von Schienenfahrzeuge oder von Luftfahrzeuge.

## Claims

1. Method of producing a base material for subsequently producing a fibre-reinforced plastic moulded part by means of a method such as injection moulding, extrusion and/or pressing or similar, for example,
**characterised by** the following method steps in combination:
□ the fibres (1) and the plastic (2, 3) in the solid state are introduced separately from one another into a mixing chamber of a matrix pressing machine,
□ before being introduced into the mixing chamber, the fibres (1) are cut to a length shorter than 30 mm,
□ the plastic (2, 3) is introduced into the mixing chamber in granulated form,
□ the plastic (2, 3) and the fibres (1) are thoroughly admixed in the mixing chamber to obtain a solid mixture,
□ the solid mixture is fed towards a die of the matrix pressing machine having orifices,
□ the solid mixture is heated in the region upstream of or as it passes through the orifices of the die,
□ during and after heating the solid mixture, the fibres (1) are enclosed at least in certain regions by and/or at least partially embedded in the plastic (2, 3) and
□ on being fed through the die, the material is reduced to a granular base material used for subsequent moulding.

2. Method as claimed in claim 1,
**characterised in that**
a synthetic plastic (2, 3) is selected as the plastic (2, 3).

3. Method as claimed in claim 2,
**characterised in that**
the fibres (1) and the plastic (2, 3), which is in the solid state, are introduced dry into the mixing chamber of the die pressing machine.

4. Method as claimed in claim 1,
**characterised in that**
the fibres (1) and the plastic (2, 3 ) , which is in the solid state, are introduced into the mixing chamber of an annular die press.

5. Method as claimed in claim 1,
**characterised in that**
before being introduced into the mixing chamber, the fibres (1) are cut to a length of less than 20 mm.

6. Method as claimed in claim 1,
**characterised in that**
before being introduced into the mixing chamber, the fibres (1) are cut to a length of less than 10 mm.

7. Method as claimed in claim 1,
**characterised in that**
prior to leaving the orifices of the die, the fibres (1) are enclosed in at least certain regions of the plastic (2, 3) and/or at least partially embedded in the plastic (2, 3) .

8. Method as claimed in claim 1,
**characterised in that**
the plastic (2, 3) in the solid mixture is at least partially plasticized by heating and/or at least partially softened.

9. Method as claimed in claim 1,
**characterised in that**
natural fibres are added to the solid mixture.

10. Method as claimed in claim 1,
**characterised in that**
between 5 and 50 % by weight of fibres (1) are added to the solid mixture.

11. Method as claimed in claim 1,
**characterised in that**
between 10 and 35 % by weight of fibres (1) are added to the solid mixture.

12. Method as claimed in claim 1,
**characterised in that**
between 15 and 30 % by weight of fibres (1) are added to the solid mixture.

13. Method as claimed in claim 1,
**characterised in that**
the solid mixture is heated to between 100EC and 250EC upstream of or as it passes through the orifices of the die.

14. Method as claimed in claim 1,
**characterised in that**
the solid mixture is heated to between 100EC and 230EC upstream of or as it passes through the orifices of the die.

15. Method as claimed in claim 1,
**characterised in that**
the solid mixture is mixed dry in the mixing chamber.

16. Method as claimed in claim 1,
**characterised in that**
the material fed through the die is cooled before being reduced to the granulated base material.

17. Method as claimed in claim 1,
**characterised in that**
the thoroughly admixed solid mixture is fed to a point shortly upstream of or as far as the die of the matrix pressing machine, and is not heated until that point.

18. Method as claimed in claim 1,
**characterised in that**
the solid mixture is not fed through the orifices of the die until it has been heated.

19. Method as claimed in claim 1,
**characterised in that**
synthetic plastics (3) and/or bio-polymers (2) of sustainable raw materials are used.

20. Method as claimed in claim 1,
**characterised in that**
only fibres (1) with a maximum length of 20 mm are used.

21. Method as claimed in claim 1,
**characterised in that**
only fibres (1) with a maximum length of 10 mm are used.

22. Method as claimed in claim 1,
**characterised in that**
the fibres (1) used are fibres (1) originating in the textile processing industry.

23. Method as claimed in claim 22,
**characterised in that**
the fibres (1) originating from the textile processing industry are conditioned and/or have foreign substances removed from them before being introduced to the mixing chamber.

24. Method as claimed in claim 22,
**characterised in that**
the fibres (1) originating from the textile processing industry are cut and/or have foreign substances removed from them before being introduced into the mixing chamber.

25. Use of a method as claimed in claim 1 to produce a base product for fibre-reinforced plastic moulded parts for commercial or passenger vehicles or track-bound vehicles or aircraft.

## Revendications

1. Procédé de fabrication d'un matériau de départ en vue de la réalisation ultérieure d'une pièce moulée en matière plastique renforcée par fibres par un procédé tel que le moulage par injection, l'extrusion et/ou le moulage par pression et similaire, **caractérisé par** l'ensemble des étapes du procédé suivantes :
- les fibres (1) et la matière plastique (2, 3) disponible à l'état solide sont introduites séparément dans le compartiment mélangeur d'une machine de moulage par pression avec matrice,
- les fibres (1) sont raccourcies à une longueur inférieure à 30 mm avant leur introduction dans le compartiment mélangeur,
- la matière plastique (2, 3) est introduite sous forme de grains dans le compartiment mélangeur,
- la matière plastique (2, 3) et les fibres (1) sont mélangées intimement dans le compartiment mélangeur pour former un mélange de matières solides,
- le mélange de matières solides est transporté en direction d'une matrice, contenant des orifices, de la machine de moulage par pression avec matrice,
- le mélange de matières solides est chauffé dans la zone en amont des orifices de la matrice ou à l'intérieur de ceux-ci,
- pendant ou après le chauffage du mélange de matières solides, les fibres (1) sont enveloppées au moins par zones et/ou enrobées au moins en partie par la matière plastique (2, 3), et
- la matière transportée à travers la matrice est broyée pour obtenir le matériau de départ en granulés destiné à être utilisé pour le moulage ultérieur.

2. Procédé selon la revendication 1, **caractérisé en ce que** la matière plastique (2, 3) choisie est une matière synthétique (2, 3).

3. Procédé selon la revendication 1, **caractérisé en ce que** les fibres (1) et la matière plastique (2, 3) disponible à l'état solide sont introduites à l'état sec dans le compartiment mélangeur de la machine de moulage par pression avec matrice.

4. Procédé selon la revendication 1, **caractérisé en ce que** les fibres (1) et la matière plastique (2, 3) disponible à l'état solide sont introduites dans le compartiment mélangeur d'une presse avec une matrice circulaire.

5. Procédé selon la revendication 1, **caractérisé en ce que** les fibres (1) sont raccourcies à une longueur inférieure à 20 mm avant leur introduction dans le compartiment mélangeur.

6. Procédé selon la revendication 1, **caractérisé en ce que** les fibres (1) sont raccourcies à une longueur inférieure à 10 mm avant leur introduction dans le compartiment mélangeur.

7. Procédé selon la revendication 1, **caractérisé en ce que** les fibres (1), avant de sortir des orifices de la matrice, sont enveloppées au moins par zones par la matière plastique (2, 3) et/ou sont enrobées au moins en partie dans la matière plastique (2, 3).

8. Procédé selon la revendication 1, **caractérisé en ce que** la matière plastique (2, 3) du mélange de matières solides est plastifiée au moins en partie et/ou ramollie au moins en partie sous l'effet du chauffage.

9. Procédé selon la revendication 1, **caractérisé en ce que** des fibres naturelles sont ajoutées dans le mélange de matières solides.

10. Procédé selon la revendication 1, **caractérisé en ce que** des fibres (1), à raison de 5 à 50 % en poids, sont ajoutées dans le mélange de matières solides.

11. Procédé selon la revendication 1, **caractérisé en ce que** des fibres (1), à raison de 10 à 35 % en poids, sont ajoutées dans le mélange de matières solides.

12. Procédé selon la revendication 1, **caractérisé en ce que** des fibres (1), à raison de 15 à 30 % en poids, sont ajoutées dans le mélange de matières solides.

13. Procédé selon la revendication 1, **caractérisé en ce que**, en amont des orifices de la matrice ou à l'intérieur de ceux-ci, le mélange de matières solides est chauffé à une température de 100°C à 250°C.

14. Procédé selon la revendication 1, **caractérisé en ce que**, en amont des orifices de la matrice ou à l'intérieur de ceux-ci, le mélange de matières solides est chauffé à une température de 100°C à 230°C.

15. Procédé selon la revendication 1, **caractérisé en ce que** le mélange de matières solides est mélangé à l'état sec dans le compartiment mélangeur.

16. Procédé selon la revendication 1, **caractérisé en ce que** la matière transportée à travers la matrice est refroidie avant d'être broyée pour obtenir le matériau de départ en granulés.

17. Procédé selon la revendication 1, **caractérisé en ce que** le mélange de matières solides intimement mélangé est transporté sous forme de matière solide jusqu'à proximité immédiate devant la matrice ou jusque vers la matrice de la machine de moulage par pression avec matrice et est chauffé seulement lorsqu'il a atteint cet emplacement.

18. Procédé selon la revendication 1, **caractérisé en ce que** le mélange de matières solides chauffé est transporté à travers les orifices de la matrice.

19. Procédé selon la revendication 1, **caractérisé en ce que** l'on utilise des matières synthétiques (3) et/ou des bio-polymères (2) à partir de matières premières renouvelables.

20. Procédé selon la revendication 1, **caractérisé en ce que** l'on utilise uniquement des fibres (1) avec une longueur maximale de 20 mm.

21. Procédé selon la revendication 1, **caractérisé en ce que** l'on utilise uniquement des fibres (1) avec une longueur maximale de 10 mm.

22. Procédé selon la revendication 1, **caractérisé en ce que** les fibres (1) utilisées sont des fibres (1) provenant du traitement des textiles.

23. Procédé selon la revendication 22, **caractérisé en ce que**, avant leur introduction dans le compartiment mélangeur, les fibres (1) provenant du traitement des textiles sont traitées et/ou sont libérées des matières étrangères.

24. Procédé selon la revendication 22, **caractérisé en ce que**, avant leur introduction dans le compartiment mélangeur, les fibres (1) provenant du traitement des textiles sont coupées et/ou sont libérées de matières étrangères.

25. Utilisation d'un procédé selon la revendication 1 pour la fabrication d'un produit de départ pour des pièces moulées en matière plastique renforcée par fibres, dans les véhicules automobiles du type poids lourd ou du type tourisme ou dans les véhicules ferroviaires ou dans les avions.
